# EUROPÄISCHE PATENTSCHRIFT

(11) **EP 1 002 936 B1**
(45) Veröffentlichungstag und Bekanntmachung des Hinweises auf die Patenterteilung: **16.03.2005**
(21) Anmeldenummer: 99122765.3
(22) Anmeldetag: 16.11.1999
(51) Int. Cl.: F01K 7/38

(54) **Verfahren zur Kondensatanwärmung in einem Speisewasserbehälter eines Dampfkraftwerkes**
Process for preheating condensate in a feed water tank of a steam power plant
Procédé pour chauffer du condensat dans un réservoir d'eau d'alimentation d'une centrale à vapeur

(30) Priorität: 18.11.1998 DE 19853206
(43) Veröffentlichungstag der Anmeldung: 24.05.2000
(73) Patentinhaber: SIEMENS AKTIENGESELLSCHAFT, 80333 München (DE)
(72) Erfinder: Kallina, Günter, 76337 Waldbronn (DE)

(56) Entgegenhaltungen:
- DE-A- 2 023 670
- US-A- 4 819 436

## Beschreibung

Die Erfindung betrifft ein Verfahren zur Kondensatanwärmung in einem Speisewasserbehälter eines Dampfkraftwerkes mittels Entnahmedampf aus einer Turbine, der über eine steuerbare Stellvorrichtung in das Kondensat im Speisewasserbehälter eingeleitet wird.

Um die Stabilität eines Verbundnetzes mit darin zusammenarbeitenden Kraftwerken zu gewährleisten, muß sich ein Teil der Kraftwerke aktiv an der Frequenzregelung, der sogenannten Primärregelung, beteiligen. Dies bedeutet für Dampfkraftwerke nach den derzeitigen Bestimmungen der DVG (Deutsche Verbundgesellschaft), daß die Wirkleistungs-Sekundenreserve eines Kraftwerkblocks so groß sein muß, daß seine elektrische Wirkleistung innerhalb von 30 s um 2 bis 5% (bezogen auf die Vollast) gesteigert werden kann. Wegen der Trägheit der Dampferzeuger kann diese Forderung allein durch Steigerung oder auch Übersteuerung der Brennstoffzufuhr nicht erfüllt werden. Unter Primärregelung laufende Dampfkraftwerksblöcke werden daher üblicherweise im sogenannten modifizierten Gleitdruckbetrieb geregelt, wobei im Normalbetrieb durch Androsselung der Turbineneinlaßventile im Dampferzeuger ein Dampfvorrat angelegt wird, der im Falle eines Frequenzeinbruchs im Verbundnetz durch Öffnen der Turbineneinlaßventile zur schnellen Wirkleistungssteigerung herangezogen wird. Von Nachteil sind dabei jedoch die stetigen Drosselverluste an dem Turbineneinlaßventil. Diese Drosselverluste können jedoch reduziert werden, wenn ergänzend weitere schnell aktivierbare Energiespeicher innerhalb des Wasser-Dampf-Kreislauf genutzt werden. Hierzu dient das z.B. aus der DE 33 04 292 C2 bekannte Kondensatstopp- oder Kondensatstauverfahren, bei dem in Verbindung mit einer Vorerwärmung des Kondensats mittels Entnahmedampf aus der Turbine der Kondensatstrom entsprechend der Lastanforderung reduziert wird, so daß als Reaktion darauf sich auch der Entnahmedampfstrom reduziert und mehr Dampf durch die Turbine strömt. Die Vorerwärmung des Kondensats erfolgt in Niederdruckvorwärmern und dem Speisewasserbehälter, wobei zur Verbesserung des dynamischen Verhaltens die Niederdruckvorwärmer dampfseitig über steuerbare Stellvorrichtungen gedrosselt werden können. Eine dampfseitige Drosselung des Speisewasserbehälters ist dagegen problematisch, weil es hierbei leicht zu einem Druckabfall in dem Speisewasserbehälter kommen kann, so daß die nachgeordneten Speisepumpen aufgrund von Kavitationseffekten beschädigt werden können.

Aus dem Buch Konzeption und Aufbau von Dampfkraftwerken", Technischer Verlag Resch, Verlag TÜV Rheinland, 1985, Seiten 335 bis 337 und 368 f., sind unterschiedliche Bautypen von Speisewasserbehältern bekannt, bei denen der Entnahmedampf aus der Turbine in den unteren Kondensatraum des Speisewasserbehälters über Loch- oder Düsenrohre unter Wasser eingeleitet wird. Das Kondensat wird zur Entgasung entweder direkt in den darüberliegenden Dampfraum des Speisewasserbehälters eingespritzt oder in einen auf dem Speisewasserbehälter aufgesetzten Entgaser eingespritzt und dort über den Entgaserquerschnitt verrieselt. Im Falle des Entgasers wird der Entnahmedampf über ein steuerbares Ventil direkt in einen unteren Kondensatraum des Entgasers eingeleitet, wobei hinter dem Ventil ein Teil des Entnahmedampfstroms über ein weiteres Ventil in den Kondensatraum des Speisewasserbehälters abgezweigt wird.

Aus der DE 24 38 096 A1 ist es bekannt, bei einem störfallbedingten plötzlichen Anstieg des Entnahmedampfstromes einen Teil davon in den Dampfraum über dem Kondensat in dem Speisewasserbehälter abzuzweigen, um ein Ansteigen des Kondensatspiegels und eine damit verbundene Behinderung der Entgasung des in den Dampfraum eingespritzten Kondensats zu verhindern.

Aus der DE-OS 1 776 196 ist es bekannt, eine gleichbleibende Druckdifferenz zwischen dem in den Dampfraum des Speisewasserbehälters eingespritzten Kondensat und dem Dampf im Dampfraum dadurch aufrechtzuerhalten, daß einer zum Einspritzen des Kondensats dienenden Wasserkammer ein Teil des Entnahmedampfstromes und dem Dampfraum ein weiterer Teil des Entnahmedampfstromes zugeführt wird.

Der Erfindung liegt die Aufgabe zugrunde, eine dampfseitige Steuerung der Vorwärmleistung des Speisewasserbehälters bei gleichzeitiger Gewährleistung eines kavitationsfreien Betriebs nachgeordneter Speisepumpen zu ermöglichen.

Gemäß der Erfindung wird die Aufgabe dadurch gelöst, daß bei dem eingangs angegebenen Verfahren bei einer Reduzierung des Entnahmedampfstroms ein Teil des Entnahmedampfstroms in den Dampfraum über dem Kondensat in dem Speisewasserbehälter abgezweigt wird.

Bei der Dampfeinleitung in den unteren Kondensatraum des Speisewasserbehälters kondensiert der Entnahmedampf aufgrund des intensiven Kontaktes mit dem Kondensat, so daß die Wärmeaufnahme des Kondensats und damit der Entnahmedampfverbrauch groß ist. Im Dampfraum über dem Kondensat ist der Wärmekontakt des zugeführten Entnahmedampfs mit dem Kondensat vergleichsweise gering, so daß auch die Wärmeaufnahme des Kondensats und damit der Entnahmedampfverbrauch gering ist. Indem bei einer Reduzierung des Entnahmedampfstroms ein Teil des Entnahmedampfstroms als Polsterdampf in dem Dampfraum über dem Kondensat abgezweigt wird, wird die Wärmeaufnahme des Speisewasserbehälters sofort entsprechend reduziert und über die verringerte Entnahmedampfmenge in Turbinenleistung umgesetzt, wobei gleichzeitig durch den Polsterdampf der Druck im Speisewasserbehälter aufrechterhalten wird. Eine Gefährdung der Speisepumpen ist damit ausgeschlossen. Im Rahmen einer schnellen Leistungsregelung des Dampfkraftwerkes kann die Wirksamkeit bisheriger Kondensatstauvefahren ohne dampfseitige Führung der Vorwärmleistung des Speisewasserbehälters sowohl statisch als auch dynamisch deutlich gesteigert werden, wobei in vielen Fällen auf die bisherige Androsselung der Turbineneinlaßventile im oberen Lastbereich vollständig verzichtet werden kann. Dadurch ergibt sich eine für Dampferzeuger und Turbine äußerst schonende Fahrweise von Dampfkraftwerken im Primärregelbetrieb ohne dauernde Reduktion des Wirkungsgrades aufgrund angedrosselter Turbineneinlaßventile.

Zur weiteren Erläuterung der Erfindung wird im folgenden auf die Figuren der Zeichnung Bezug genommen; im einzelnen zeigen:
- Figur 1: ein Beispiel für ein Dampfkraftwerk in Form eines Blockschaltbildes
- Figur 2: ein Beispiel für die erfindungsgemäße Kondensatanwärmung in einem Speisewasserbehälter mit einem Entgaser und
- Figur 3: ein weiteres Ausführungsbeispiel für die erfindungsgemäße Kondensatanwärmung

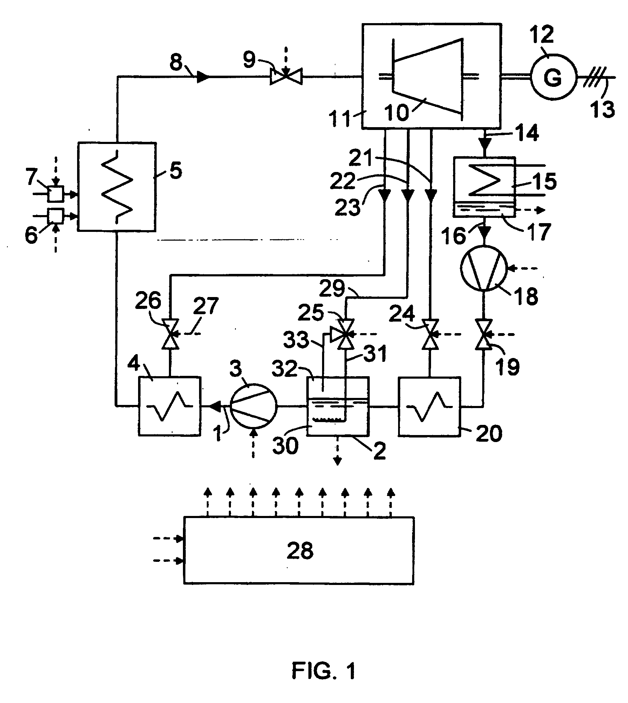

Wie das Beispiel eines Dampfkraftwerks in Figur 1 zeigt, wird Speisewasser (Kondensat) 1 aus einem Speisewasserbehälter 2 mittels einer Speisepumpe 3 direkt oder über einen Hochdruckvorwärmer 4 einem Dampferzeuger 5 zugeführt und dort unter gleichzeitiger Brennstoffzufuhr 6 und Luftzufuhr 7 in Hochdruckdampf 8 mit hoher Temperatur umgewandelt. Der Hochdruckdampf 8 wird über ein Turbineneinlaßventil 9 einem in der Regel aus mehreren Turbinen 10 bestehenden Turbinensatz 11 zugeführt, der einen Generator 12 zur Abgabe elektrischer Leistung an ein Netz 13 antreibt. Der den Turbinensatz 11 verlassende Abdampf 14 wird in einem Kondensator 15 abgekühlt, wobei sich das dabei entstehende Kondensat 16 in einem Kondensatsbehälter 17 sammelt. Von dort wird das Kondensat 16 mittels einer Kondensatpumpe 18 durch ein Kondensatregelventil 19 und einen gegebenenfalls mehrstufigen Niederdruckvorwärmer 20 dem Speisewasserbehälter 2 zugeführt In den Vorwärmern 4, 20 und dem Speisewasserbehälter 2 wird das Kondensat 16 mit Hilfe von Entnahmedampf 21, 22, 23 aus unterschiedlichen Teilen des Turbinensatzes 11 erwärmt. Die Kondensatvorerwärmung ist dampfseitig mit Hilfe von steuerbaren Stellvorrichtungen 24, 25, 26 drossel- bzw. abschaltbar. Wie durch gestrichelte Pfeile, z.B. 27, angedeutet ist, lassen sich die Pumpen 3, 18, die Brennstoffzufuhr 6, die Luftzufuhr 7, die Ventile 9, 19 und die Stellvorrichtungen 24, 25, 26 im Rahmen der Regelung des Dampfkraftwerks mittels einer Regeleinrichtung 28 einstellen; die Regeleinrichtung 28 erhält ferner Füllstandsinformationen von dem Speisewasserbehälter 2 und dem Kondensatbehälter 17.

Die Stellvorrichtung 25 ist als 3-Wege-Ventil ausgebildet, an dem eine von dem Turbinensatz 11 kommende Dampfleitung 29, eine in den unteren Kondensatraum 30 des Speisewasserbehälters 2 führende Dampfeinleitung 31 und ein in den Dampfraum 32 über dem Kondensatraum 30 führender Dampfabzweig 33 angeschlossen sind. Der Speisewasserbehälter 2, der Niederdruckvorwärmer 20 und der Kondensatbehälter 17 bilden einen schnell aktivierbaren, nichtthermischen Energiespeicher, der zur schnellen Wirkleistungssteuerung des Dampfkraftwerkes herangezogen werden kann. Durch Änderung des Kondensatstroms 16 mit Hilfe des Kondensatregelventils 19 werden unmittelbar die Entnahmedampfströme 21, 22 aus dem Turbinensatz 11 zu dem Niederdruckvorwärmer 20 und dem Speisewasserbehälter 2 beeinflußt. Wird der Kondensatstrom 16 reduziert, so sinkt das Kondensatniveau im Speisewasserbehälter 2 ab, während es im Kondensatbehälter 17 ansteigt. Der Niederdruckvorwärmer 20 und der Speisewasserbehälter 2 werden weniger gekühlt, so daß die Entnahmedampfströme 21, 22 abnehmen und die Antriebsleistung des Turbinensatzes 11 und damit die von dem Generator 12 an das Netz 13 abgegebenen Leistung ansteigen. Um das dynamische Verhalten zu verbessern, werden die Entnahmedampfströme 21, 22 zusätzlich durch die Stellvorrichtungen 24, 25 gedrosselt. Bei dem Speisewasserbehälter 2 wird gleichzeitig mit der Drosselung des Entnahmedampfstromes 22 und Teil davon über den steuerbaren Dampfabzweig 33 als Polsterdampf in den Dampfraum 32 des Speisewasserbehälters 2 geleitet. Der Polsterdampf gewährleistet die Aufrechterhaltung des Drucks in dem Speisewasserbehälter 2 und damit einen kavitationsfreien Betrieb der Speisepumpe 3. Da der in den Dampfraum 32 abgezweigte Dampfstrom nur gering ist, reduziert sich in Summe der Entnahmedampfstrom 22 aus dem Turbinensatz 11, dessen Turbinenleistung entsprechend ansteigt. Sobald dann nach 1 bis 3 Minuten die geforderte Dampfleistung durch Erhöhung der Brennstoffzufuhr 6 und Luftzufuhr 7 von dem Dampferzeuger 5 erbracht wird, wird der Kondensatstrom 16 wieder in den Gleichgewichtszustand gebracht und gegebenenfalls der Speisewasserbehälter 2 wieder aufgeladen. Diese Fahrweise ist für den Dampferzeuger 5 und den Turbinensatz 11 äußerst schonend. Die bisher praktizierte Androsselung des Turbineneinlaßventils 9 kann reduziert werden oder entfallen, so daß sich nur eine geringe oder sogar keine ständige Reduktion des Wirkungsgrads des Dampfkraftwerks ergibt. Die Speisepumpe 3 ist nicht gefährdet.

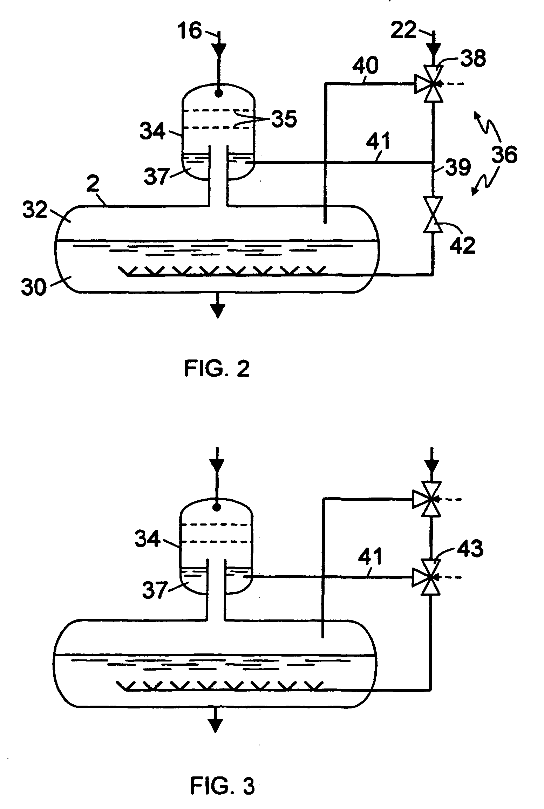

Bei dem in Figur 2 gezeigten Beispiel ist auf dem Speisewasserbehälter 2 ein Entgaser 34 aufgesetzt. Das von dem Niederdruckvorwärmer 20 kommende Kondensat 16 wird im oberen Bereich des Entgasers 34 in diesen eingesprüht und mit Hilfe von Lochteilen 35 verrieselt und dabei über den Entgaserquerschnitt verteilt. Der von dem Turbinensatz 11 kommende Entnahmedampfstrom 22 ist mittels einer steuerbaren Stellvorrichtung 36 in einen unteren Kondensatraum 37 des Entgasers 34, den unteren Kondensatraum 30 des Speisewasserbehälters 2 und den darüberliegenden Dampfraum 32 einleitbar. Die Stellvorrichtung 36 enthält ein 3-Wege-Ventil 38, das im Zuge einer Dampfeinleitung 39 in den unteren Kondensatraum 30 des Speisewasserbehälters 2 angeordnet ist und einen steuerbaren Dampfabzweig 40 in den oberen Dampfraum 32 des Speisewasserbehälters 2 aufweist. Hinter dem 3-Wege-Ventil 38 führt von der Dampfeinleitung 39 ein weiterer Dampfabzweig 41 in den Kondensatraum 37 des Entgasers 34. Im weiteren Verlauf der Dampfeinleitung 39 ist ein Ventil 42 angeordnet.

Das in Figur 3 gezeigte Ausführungsbeispiel unterscheidet sich von dem nach Figur 2 durch ein zweites 3-Wege-Ventil 43, das das Ventil 42 ersetzt und den weiteren Dampfabzweig 41 zu dem Kondensatraum 37 des Entgasers 34 beeinhaltet.

## Patentansprüche

1. Verfahren zur Kondensatanwärmung in einem Speisewasserbehälter (2) eines Dampfkraftwerks mittels Entnahmedampf (22) aus einer Turbine (10, 11), der über eine steuerbare Stellvorrichtung (25) in das Kondensat im Speisewasserbehälter (2) eingeleitet wird, **dadurch gekennzeichnet, daß** bei einer Reduzierung des Entnahmedampfstromes (22) ein Teil des Entnahmedampfstromes (22) in den Dampfraum (32) über dem Kondensat in dem Speisewasserbehälter (2) abgezweigt wird.

2. Verfahren nach Anspruch 1, **dadurch gekennzeichnet, daß** es im Rahmen einer schnellen Leistungsregelung des Dampfkraftwerkes durch Kondensatstau eingesetzt wird.

3. Verfahren nach Anspruch 2, daß im Normalbetrieb des Dampfkraftwerks das Turbineneinlaßventil (9) ungedrosselt ist.

## Claims

1. Method for condensate heating in a feed-water tank (2) of a steam power station by means of extraction steam (22) from a turbine (10, 11), the said extraction steam being introduced into the condensate in the feed-water tank (2) via a controllable actuating device (25), **characterized in that**, when there is a reduction in the extraction-steam stream (22), part of the extraction-steam stream (22) is branched off into the steam space (32) above the condensate in the feed-water tank (2).

2. Method according to Claim 1, **characterized in that** it is used within the framework of a rapid power regulation of the steam power station by means of the condensate build-up.

3. Method according to Claim 2, **characterized in that**, during the normal operation of the steam power station, the turbine inlet valve (9) is unthrottled.

## Revendications

1. Procédé pour réchauffer légèrement du condensat dans une cuve d'eau d'alimentation d'une centrale à vapeur, au moyen de vapeur (22) prélevée d'une turbine (10, 11) qui est envoyée par un dispositif (25) de réglage qui peut être commandé dans le condensat dans la cuve (2) d'eau d'alimentation, **caractérisé en ce que**, s'il se produit une réduction du courant (22) de vapeur prélevée, on dérive une partie du courant (22) de vapeur prélevée dans l'espace (32) réservé à la vapeur au-dessus du condensat de la cuve (2) d'eau d'alimentation ;

2. Procédé suivant la revendication 1, **caractérisé en ce qu'**on l'utilise dans la cadre d'une régulation rapide de puissance de la centrale à vapeur par accumulation de condensat.

3. Procédé suivant la revendication 2, **caractérisé en ce que**, en fonctionnement normal de la centrale à vapeur, la vanne (9) d'entrée de la turbine n'est pas étranglée.
